(19)

Europäisches
Patentamt
European
Patent Office
Office européen
des brevets

(11) **EP 2 321 438 B1**

(12) **EUROPEAN PATENT SPECIFICATION**

(45) Date of publication and mention
of the grant of the patent:
**07.06.2017 Bulletin 2017/23**

(51) Int Cl.:
***C22B 3/02*** *(2006.01)*      ***C22B 3/04*** *(2006.01)*

(21) Application number: **09811200.6**

(86) International application number:
**PCT/IN2009/000277**

(22) Date of filing: **11.05.2009**

(87) International publication number:
**WO 2010/026599 (11.03.2010 Gazette 2010/10)**

(54) **A BENCH SCALE PRESSURE REACTOR UNIT WITH DATA ACQUISITION AND CONTROL SYSTEM FOR CHEMICAL LEACHING OF MINERALS**

TISCHWAAGEN-DRUCKREAKTOREINHEIT MIT DATENERFASSUNG UND STEUERSYSTEM ZUR CHEMISCHEN LAUGUNG VON MINERALIEN

UNITÉ DE RÉACTEUR SOUS PRESSION À L'ÉCHELLE DU LABORATOIRE AVEC UN SYSTÈME D'ACQUISITION DE DONNÉES ET DE RÉGULATION POUR LA LIXIVIATION CHIMIQUE DE MINÉRAUX

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.09.2008 IN KO15462008**

(43) Date of publication of application:
**18.05.2011 Bulletin 2011/20**

(73) Proprietor: **Tata Steel Limited**
**Jamshedpur 831 001 (IN)**

(72) Inventors:
 • **DASH, P., S.**
 **Jamshedpur 831 001 (IN)**
 • **LINGAM, R., K.**
 **Jamshedpur 831 001 (IN)**

 • **KUMAR, Santosh, S.**
 **Jamshedpur 831 001 (IN)**
 • **BANERJEE, P., K.**
 **Jamshedpur 831 001 (IN)**
 • **BHATTACHARJEE, D.**
 **Jamshedpur 831 001 (IN)**
 • **GANGULY, S.**
 **Jamshedpur 831 001 (IN)**

(74) Representative: **Green, Mark Charles**
**Urquhart-Dykes & Lord LLP**
**One Euston Square**
**40 Melton Street**
**London NW1 2FD (GB)**

(56) References cited:
**EP-A1- 1 882 479      EP-A2- 1 245 686**
**CA-A1- 2 277 622      US-A1- 2005 093 211**

**Description**

## FIELD OF INVENTION

The invention relates to a bench scale pressure reactor unit with data acquisition and control system for chemical leaching of minerals. More particularly, the invention relates to a bench scale pressure reactor system for extracting minerals and metals through a process of chemical leaching at elevated temperature and pressure.

## BACKGROUND OF INVENTION

Beneficiation is a variety of processes whereby extracted ore from mining is reduced to particles that can be separated into mineral and waste, the former suitable for further processing or direct use. It may be conducted via a range of techniques including crushing, grinding, magnetic separation, floatation, gravity etc. Beneficiation enables operators to improve the quality of their end product and to enhance the overall processing performing of an ore. Accordingly, physical as well as chemical cleaning (beneficiation) processes have been explored. In physical cleaning, the mineral is crushed into suitable particle size, and the waste is removed in processes based on the differences in their physical properties. In contrast to physical cleaning, chemical processes involves addition of chemical which reacts with the mineral matter or waste and allow it to be easily removed. This includes mainly the process of liquid/solid extraction, also known as leaching, involves the transfer of a solute from a solid, generally employed in particulate form, to a liquid solvent which is termed as the 'extract'. In this process, the solid imbibes the solvent which dissolves the solute and thereby extracts it from the solid. Leaching is a very old process and a great diversity of apparatus has been developed over the years to meet the varying requirements of the process in respect to its widely diverse applications.
Leaching equipment including pressure reactors are commercially available for a wide variety of processes, including fixed-bed processes in which solvent is percolated through a stationary bed of solids, moving-bed processes in which the solids are conveyed through the solvent with little or no agitation, and dispersed- solid processes in which the solids are dispersed in the solvent by mechanical agitation. Among the many critical problems involved in the successful operation of a leaching process are those associated with the fact that the solid material to be leached is often quite heterogeneous in character, and therefore exceedingly difficult to treat in an optimum manner.
However, most of these reactors are operated at atmospheric pressure only, and hence, there is a limit on temperature to which the material can be treated. In most of the cases the maximum temperature limit in such reactors are less than the boiling point of the liquid being used for leaching out the solid materials. Besides, when pressure is applied, uniform mixing of the slurry inside the pressure reactor becomes a difficult proposition because of inadequate provision or lack of stirring.
U.S. Patent No. 6613271 disclose an apparatus and method for recovering valuable metals particularly gold using an in line leach reactor. This invention states about the apparatus and method for continuously separating a dense valuable material such as gold from a feed including a grinding mill which directs a crushed feed through hydrocyclones for separation into a light and dense reaction. The fraction is concentrated further by in line pressure jigs inline and the concentrate is leached in a rotating leaching reactor. The resulting pregnant liquor is subjected to electrowinning to recover gold and the spent liquor is recycled.
U.S. Patent No. 4824939 discloses about a novel leaching process which is useful for leaching a particular solid material that comprises extractable and nonextractable portions. The process includes the steps of introducing the particulate solid material and a liquid solvent to an extraction zone; against the liquid solvent to a degree sufficient to suspend the particulate solid material and effect segregation of particles thereof in relation to their propensity to settle; maintaining contact between the liquid solvent and the particulate solid material for a time sufficient to leach extractable material therefrom: and selectively withdrawing particles from the extraction zone. In a preferred embodiment, the leaching process is a multi-stage process employing a series of stages in which the selectively withdrawn particles from each stage are introduced to the next successive stage of the series.
U.S. Patent No. 5993635 relates to a method enabling a sulphide mineral composition to be leached at atmospheric pressure instead of above atmosphere pressure which has been hitherto required in order to achieve acceptable rates of leaching.

## OBJECTS OF INVENTION

It is therefore an object of the invention to propose a bench - scale pressure reactor system which allows the leaching liquids to leach out solid materials at a temperature above the boiling temperature of the liquid.
Another object of the invention is to propose a bench - scale pressure reactor system, which allows extraction of multivarious minerals and metals through a process of chemical leaching at an elevated temperature and pressure.
A still another object of the invention is to propose a bench - scale pressure reactor system, which enables

evaluating detailed kinetics, thermodynamics, and energy requirement for extraction of materials by carrying-out existing chemical leaching and/or the invented leaching process.

## SUMMARY OF INVENTION

Accordingly, a bench scale pressure system is provided in which up to 0.5 kg of ore/minerals can be treated. This helps in optimization as well as scaling up the chemical leaching process at elevated temperature and pressure to a commercial scale. In the present case, an example has been given for brief methodology to be followed for carrying chemical leaching of coal using alkali and acid leaching method. However, this system can be used for chemical leaching of various other minerals using any other inorganic chemical including acid and alkalis. This system can be used for evaluating detail kinetics, thermodynamics and energy requirement for extraction of minerals using existing chemical leaching processes and also for development for new processes for extraction of other minerals using this leaching technique. Methodology, scientific background and few important test results using this system have been discussed in the subsequent sections.

## BRIEF DESCRIPTION OF THE ACCOMPANYING DRAWINGS

Fig. 1 Schematic diagram of the bench scale pressure reactor system according to the invention for carrying out chemical leaching of minerals.

Fig. 2 Schematic diagram of a pressure control arrangement incorporated into the system of the invention

Fig. 3 Schematic diagram of data acquisition and control system for the reactor.

## DETAIL DESCRIPTION OF INVENTION

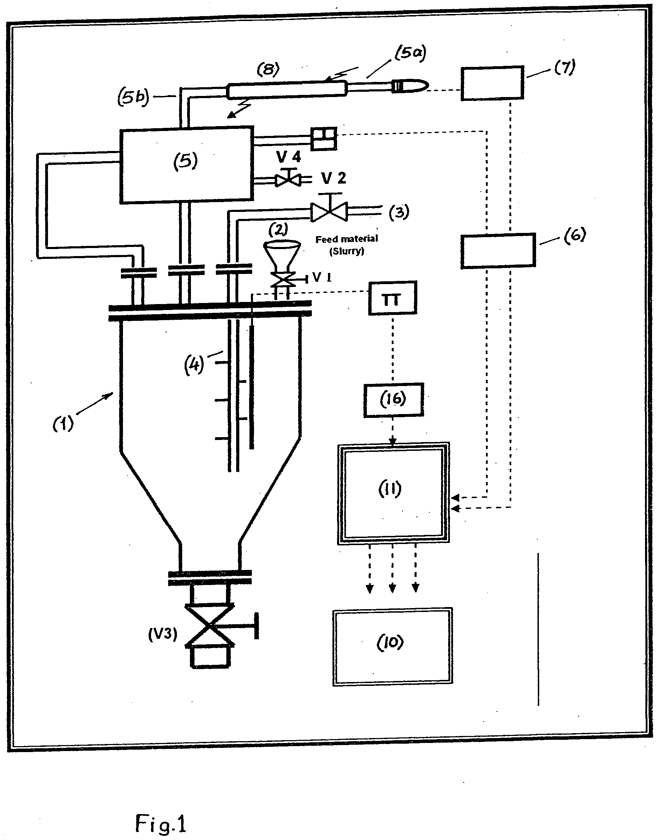

A schematic diagram of a bench scale pressure reactor system for carrying out chemical leaching method at elevated pressures and temperatures according to the invention, is shown in Fig. 1. The system comprises a batch reactor (1) having capacity of approximately, 5.0 liters with means for heating and continuous mixing; a cooling section/chilling device; means for applying pressure up to bar and a data acquisition and control means. The reactor (1) is of diameter approximately 180 mm (7.0 inch) and height approximately 250 mm (10.0 inch) having a conical bottom. The reactor (1) is made up of SS-316 material. The feed materials are charged inside the reactor (1) through a charging funnel (2) at the top by opening a first valve (VI). The products after completion of the reaction time are taken out by opening a third valve (V3). Pressure can be applied inside the reactor (1) through a second valve (V2) by using compressed air, nitrogen or argon. The inlet pipe (3) through which pressure is applied is having side arms (4) at different angles inside the reactor (1) and is extending up to end of the cylindrical part of the reactor (1). The side arms (4) and inlet pipe (3) are having perforations through which pressure is applied inside the reactor (1). This configuration facilitates continuous agitation and mixing of the reactants inside the reactor (1). A chiller unit (5) having one horizontal coil (5a), and one vertical coil (5b) is fitted at the top of the reactor (1) as shown in the schematic diagram. A pressure sensor (6) is connected with the reactor (1) to control the pressure inside the reactor (1). The

pressure inside the reactor (1) is controlled by a control element called solenoid valve (V4), which acts as an ON-OFF control. The vertical coil (5b) present inside the chiller unit (5) is extending up to the top of the reactor (1) at one end and is connected to a pressure transmitter (7) on the other side through a condenser (8). The horizontal coil (5a) is connected to the solenoid valve (V4) through which pressure is released from the reactor (1) through control action as and when required. The chiller unit (5) can either be filled with ice or cold water which can be circulated continuously so that the coils (5a, 5b) do not get overheated. This is important as the pressure transmitter (7) or sensor (6) should never be exposed to very high temperature. The reactor (1) is heated with two heating coils of 1-kilowatt capacity each (not shown) which are fitted outside the circumference of the reactor (1). A Resistance Temperature Detectors (16) is mounted inside the reactor (1) to indicate and control temperature. There are two heating coils (not shown) each of 1 kw capacity to raise the temperature inside the reactor (1). These two heating coils (not shown) are mounted on the circumference of the reactor (1), which are well insulated from the surrounding. The RTD (16) is connected to a first PID controller (17) (Proportional Integral Derivative) through which the temperature inside the reactor (1) can be controlled using a relay switch connected to the heaters. A second PID controller (18) is used to control the pressure inside the reactor (1). The pressure transmitter (7) sends the signal to the pressure controller (6) which in turn sends the signal to the solenoid valve (V4) to open or close. There is a sensor (9) to sense the amount of current passing through the 'Live wire" which provides electricity supply to the two heating coils. The output from the device (current data) is sent to a host computer (10) for measuring the total energy consumption during the process using the calculation as mentioned below.

$$Power\ (kwhr) = Power\ (kwhr) + Voltage\ (volt) * Current\ (ampere)$$

$$Energy = (Power)/time$$

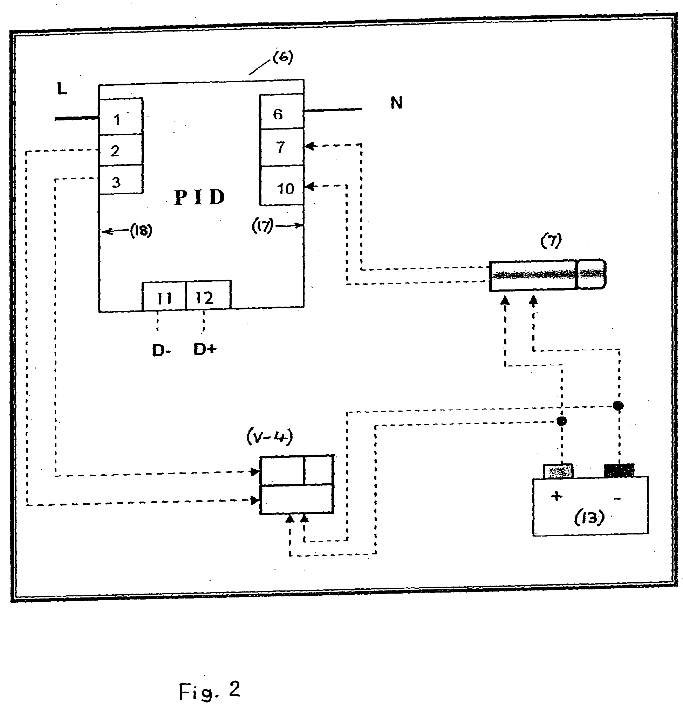

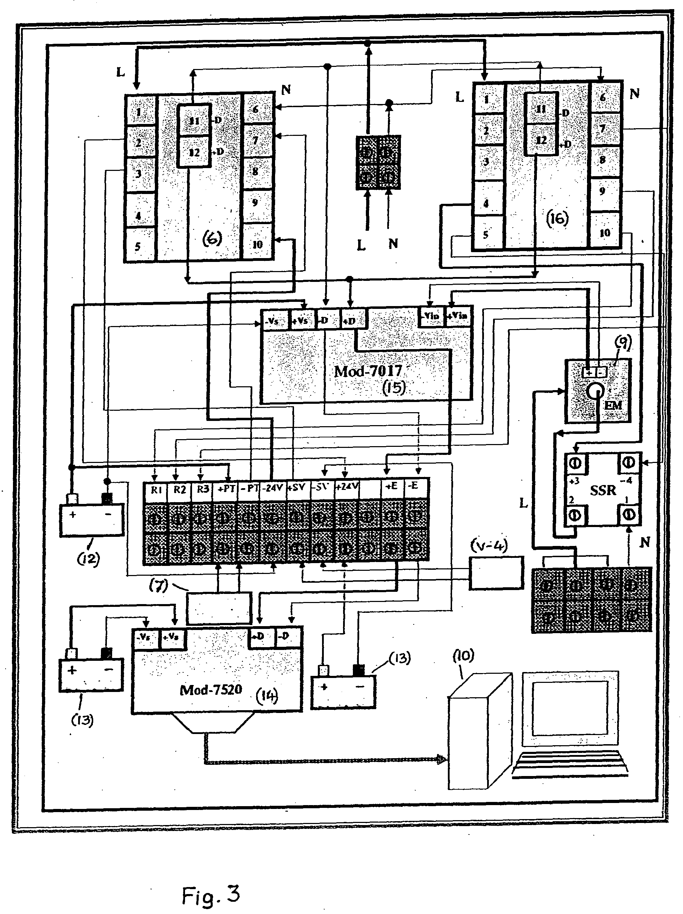

The temperature, pressure and current data from a data acquisition module (11) can be seen on the host computer (10) through a graphical user interface developed particularly for this system. The details of the microprocessor based interfacing for the data acquisition is described later. The data acquisition modules (11), PID controllers (17, 18) (pressure and temperature), the current sensor (9) and batteries (12, 13) are placed inside a panel. Schematic views of the pressure control arrangement and means for data requisition and control along with the circuit diagram for the system are shown in Fig. 2 and Fig. 3 respectively.

**Different sensors and modules adapted in the system**

Sensors:

RTD temperature Sensor:

The RTD (16) is a sensor that operates on the principle that the resistance of a metal like platinum increases with an increases in temperature at a specific rate.

The Resistance Temperature Detector is often selected when accurate temperature measurements are required RTD's could be made of Copper, Nickel or platinum. Currently, Platinum is the industry standard for the material use in making RTD's. As long as the temperature relationship with resistance is predictable, smooth, and stable, the phenomenon can be used for accurate temperature measurement. To ensure high accuracy, the resistance effects due to impurities must be small and the resistance versus temperature curve must be known and repeatable. Platinum RTD's are suitable for use from -50C to 550C, when long-term temperature stability and repeatability is required. They offer virtually a linear response over this range. The details of the two data acquisition module (14,15) used in the present case has been described below.

The Pressure Sensor (6)

Pressure sensor (6) is a sensor that operates on the principle of capacitance. It consist of a diaphragm and two parallel plates. An insulating fluid is used to insulate the diaphragm from the reactor's vapour. Here mercy is used as the insulating fluid because its density is higher than normally used fluid. It can sense pressure range from 0-100 $kg/cm^2$. When the reactor pressure acts on the insulating fluid it transmits the pressure to the diaphragm which changes the capacitance between the two plates. And due to the change in capacitance a change in potential difference develops across the plates that in turn give rise a change in output voltage.

**The Solenoid valve (V-4)**

The solenoid valve (V-4) is the final control element in this process. It works on the principle of Magnetic Induction Effect and is consisting of a plunger and a coil. It is operate in ON-OFF mode (i.e., at one time it is either ON or OFF). The operating voltage is 22-24 V dc. The moment voltage is applied the coil get energized and it pull the plunger inside. And as the applied voltage is removed the coil gets de-energized and releases the plunger to reach its original position. This effect is used to release and maintain pressure in side the reactor according to the control signal generated by the pressure controller.

**Modules**

**7520 Module (14)**

This module (14) provides the necessary serial bus protocol conversion from PC standard RS 232 to a 2 wire RS 485 interface. This module (4) connects all other modules on the RS 485 network. Its specification is :

Input: RS 232C protocol

Output: RS 485 protocol (2 wires, D+, D-)

Baud rate : "Self Tuner" auto switching baud rate, 300 to 115200 bps.

Modules : 256 modules maximum without repeater

**7017 Module (15)**

The 7017 is a 8-Channel Voltage and 4-20mA Input Module. It takes in an analog input. Eight different inputs can be given to this module at a time at Channel 0 to Channel 7. Its specifications is :

Input type :mV, V, mA

Input Range : +/- 150 mV, +/-500mV, +/- 1 V, +/- 5V, +/- 200mA

Sample Rate: 10 samples per second

Bandwidth :13.1 Hz

Accuracy : 0.01% or better

**Methodology to be followed for chemical leaching of minerals in the bench scale pressure reactor system**

In the present case, an example has been illustrated for brief methodology to be followed for carrying out chemical leaching of coal using alkali and acid leaching method with the pressure reactor system. Here, West Bokaro fine clean coal was taken as a feed sample for this process. The feed sample can be taken directly or can be crushed to desired size fraction for improving the kinetics of the process. This West Bokaro fine clean coal is referred as feed coal in the subsequent section of this text and the clean coal produced from this process is referred as Product.

**Sample Preparation:**

200-300 gm of coal is taken through coning quartering method from the received West Bokaro fine clean coal. This coal sample is dried in an over at 105°C.

**Chemicals:**

Commercially available sodium hydroxide (NaOH) in combination with sulphuric acid ($H_2SO_4$) and HCl were used in the present method.

The treatment process

The chemical leaching were carried out in the reactor assembly using two steps. In the first step, feed coals (200-300 gm) were treated with varying concentration of alkali (NaOH) (2-3 lit) at varying temperatures under different pressure conditions for particular length of time in the reactor system described above. The treated coal is then washed repeatedly with water and/or HCl and then dried. Then, the treated coal is filtered, washed with water and dried before sensing for their chemical, rheological and petrographical properties.

The coal to slurry ratio can be maintained at 1:10 or 1:5 keeping the total volume 2-3 liters. The Moment the feed is fed to the reactor (1), first the heater is switched on and then the data acquisition means (11) is switched on. The readings are checked in the host computer (10) using the GUI to ensure proper working of the sensors (6,7). Once checked, the data captured using the save command which saves the data to a text file. Pressure is applied inside the reactor (1) by opening the inlet valve (V2) for pressure as desired for the particular process. The treated coal samples are collected at the end of the process only once pressure inside the reactor (1) is released. The sample can be washed with water and/or 10-20% $HCl/H_2SO_4$ solution. These samples are dried and analyzed for various properties. Multi-stage processes can also be carried out using the system.

Experiments have been conducted at various pressure and temperatures. Few results are shown below for West Bokaro coal with 40% NaOH and 10% HCl washing.

| Coal | : WB Clean (-30 mesh) |
|---|---|
| Coal : Slurry | : 1:10 |
| Temperature | : 130 deg.C |
| Pressure | : 3.5 bar |
| Time | : 2.5 hr |
| Initial ash | : 12.5% |

The product sample had nearly 5.5% ash.

With the development of the present bench scale pressure reactor system, the chemical cleaning process can be carried out at high temperature and pressure using a bigger size reactor with jacketed steam heating or electric heating arrangement as described above. Detail thermodynamic and kinetic data evaluation as well as determination of energy requirement for this process can be achieved using the bench scale system. The will help in optimization as well as scaling up the chemical leaching process to and low ash coal can be produced economically for coke making. However, this system can also be used for detail kinetics, thermodynamics and energy requirement studies for extraction of any other minerals using existing chemical leaching processes, and for development of new processes for extraction of other minerals using this leaching technique.

## Claims

1.    A bench-scale pressure reactor system for extracting minerals and metals in a chemical leaching process, comprising:

- a batch reactor (1) having means for heating and continuous mixing of metals or minerals, the reactor (1) comprising a charging funnel (2) with a first valve (V1) for discharging feed materials inside the reactor (1);
- a gas pressure application means (3, V2) for applying pressure inside the reactor (1) by adapting one of air nitrogen and argon, the means (3) comprising perforations and having side arms (4) with perforations thereon, each arm (4) disposed at different angles inside the reactor (1);
- a pressure sensor (6), including a pressure controller (V4), connected with the reactor (1), and a resistance temperature detector (16) mounted on the reactor (1), the resistance temperature detector (16) being connected to one each PID-controller (17, 18) allocated for control of pressure and temperature inside the reactor (1);
- a chiller unit (5) fillable with ice or cold water, and having one each horizontal and vertical coil (5a, 5b) provided to the reactor (1), the vertical coil (5b) and the horizontal coil (5a) being respectively connected to the pressure controller (V4) and a pressure transmitter (7) via condenser (8);
- a third valve (V3) for taking out the products on completion of the reaction time in the reactor (1);
- a sensor (9) to determine the amount of current passing through the heating means of the reactor (1);
- a data acquisitions means (11) connected to a host computer (10) for collecting, processing and outputting the on-line data for monitoring and control of the chemical leaching process; and
- analyzing means to analyze the slurry and filtrate produced during the process implementation.

## Patentansprüche

1.    Labordruckreaktorsystem zum Extrahieren von Mineralien und Metallen in einem chemischen Auslaugungsprozess, das Folgendes umfasst:

- einen Chargenreaktor (1) mit Mitteln zum Erhitzen und kontinuierlichen Mischen von Metallen oder Mineralien, wobei der Reaktor (1) einen Beschickungstrichter (2) mit einem ersten Ventil (V1) zum Ablassen von Einsatzmaterialien im Reaktor (1) umfasst;
- ein Gasdruckapplikationsmittel (3, V2) zum Applizieren von Druck in dem Reaktor (1) durch Anpassen von Luft, stickstoff oder Argon, wobei das Mittel (3) Perforationen aufweist und Seitenarme (4) mit Perforationen daran hat, wobei jeder Arm (4) in unterschiedlichen Winkeln in dem Reaktor (1) angeordnet ist;
- einen Drucksensor (6), einschließlich eines Druckreglers (V4), verbunden mit dem Reaktor (1), und einen an dem Reaktor (1) montierten Widerstandstemperaturdetektor (16), wobei der Widerstandstemperaturdetektor (16) jeweils mit jedem PID-Regler (17, 18) verbunden ist, der zum Regeln von Druck und Temperatur in dem Reaktor (1) zugeordnet ist;
- eine Kühlereinheit (5), die mit Eis oder kaltem Wasser gefüllt werden kann und jeweils eine an dem Reaktor (1) vorgesehene horizontale und vertikale Spirale (5a, 5b) aufweist, wobei die vertikale Spirale (5b) und die horizontale Spirale (5a) jeweils mit dem Druckregler (V4) und einem Drucksender (7) über einen Kondensator (8) verbunden sind;
- ein drittes Ventil (V3) zum Herausnehmen der Produkte nach Abschluss der Reaktionszeit im Reaktor (1) ;
- einen Sensor (9) zum Bestimmen der Menge an durch das Erhitzungsmittel des Reaktors (1) passierendem Strom;
- ein Datenerfassungsmittel (11), das mit einem Host- Computer (10) verbunden ist, zum Sammeln, Verarbeiten und Ausgeben der Online-Daten zum Überwachen und Steuern des chemischen Auslaugungsprozesses; und
- Analysemittel zum Analysieren des während der Prozessimplementation erzeugten Slurry und Filtrats.

**Revendications**

1. Système de réacteur sous pression à l'échelle du laboratoire destiné à l'extraction de minéraux et de métaux dans un procédé chimique de lixiviation, comprenant :

- un réacteur à fonctionnement discontinu (1) ayant un moyen de chauffage et de mélange continu de métaux ou de minéraux, le réacteur (1) comprenant un entonnoir de chargement (2) pourvu d'une première valve (V1) pour l'évacuation des matières premières dans le réacteur (1) ;
- un moyen d'application de pression de gaz (3, V2) pour l'application d'une pression dans le réacteur (1) par adaptation de l'air, de l'azote ou de l'argon de l'air, le moyen (3) comprenant des perforations et comportant des bras latéraux (4) sur lesquels se trouvent les perforations, chaque bras (4) étant disposé à des angles différents dans le réacteur (1) ;
- un capteur de pression (6), comprenant un régulateur de pression (V4), raccordé au réacteur (1), et un détecteur de température à résistance (16) monté sur le réacteur (1), le détecteur de température à résistance (16) étant raccordé à l'un de chacun des régulateurs PID (17, 18) destinés à la régulation de la pression et de la température dans le réacteur (1) ;
- une unité de refroidissement (5) pouvant être remplie avec de la glace ou de l'eau froide, et comportant l'un de chacun des serpentins, horizontal et vertical (5a, 5b), montée sur le réacteur (1), le serpentin vertical (5b) et le serpentin horizontal (5a) étant raccordés respectivement au régulateur de pression (V4) et à un transmetteur de pression (7) par l'intermédiaire d'un condensateur (8) ;
- une troisième valve (V3) pour évacuer les produits à la fin du temps de réaction dans le réacteur (1) ;
- un capteur (9) pour déterminer la quantité de courant qui traverse le moyen de chauffage du réacteur (1) ;
- un moyen d'acquisition de données (11) raccordé à un ordinateur hôte (10) pour collecter, traiter et émettre les données en ligne afin de surveiller et de réguler le procédé chimique de lixiviation ; et
- un moyen d'analyse pour analyser la suspension et le filtrat produit au cours de la mise en oeuvre du procédé.

Fig.1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6613271 B
- US 4824939 A
- US 5993635 A